# EUROPÄISCHE PATENTSCHRIFT

(11) **EP 2 918 205 B1**
(45) Veröffentlichungstag und Bekanntmachung des Hinweises auf die Patenterteilung: **14.09.2016**
(21) Anmeldenummer: 15154008.5
(22) Anmeldetag: 05.02.2015
(51) Int. Cl.: A47J 37/10, A47J 36/06

(54) **Spritzschutz für Töpfe, Pfannen und andere Kochgeräte**
Splash guard for pots, pans and other cooking appliances
Protection contre les projections pour les casseroles, poêles et autres ustensiles de cuisson

(30) Priorität: 10.03.2014 DE 202014101044 U
(43) Veröffentlichungstag der Anmeldung: 16.09.2015
(73) Patentinhaber: Bruckmann, Gero, 79540 Lörrach (DE); Hong, Han Dat, 4053 Basel (DE)
(72) Erfinder: Bruckmann, Gero, 79540 Lörrach (DE); Hong, Han Dat, 4053 Basel (DE)
(74) Vertreter: Charrier Rapp & Liebau

(56) Entgegenhaltungen:
- EP-A1- 0 185 969
- DE-U1- 20 208 887
- US-A- 2 587 773

## Beschreibung

Die Erfindung betrifft einen Spritzschutz für Töpfe, Pfannen und andere Kochgeräte.

Es ist bekannt, als Spritzschutz für Töpfe und Pfannen feine Siebe oder Deckel mit Öffnungen auf den oberen Rand des Topfs bzw. der Bratpfanne aufzulegen, um zu verhindern, dass beim Braten oder Kochen Fett oder Wasser aufspritzt. Die bekannten Spritzschutzeinrichtungen in Form von Sieben oder Deckeln mit Öffnungen sind jedoch schwer zu reinigen und benötigen beim Verstauen viel Platz.

Aus der DE 20 2012 001 488 U1 und der DE 20 2013 001 470 U1 sind weiterhin Spritzschutz-Einrichtungen bekannt, welche einen Rahmen umfassen, in den ein flächiger, saugender Zellstoff, insbesondere ein Küchenpapier eingespannt werden kann. Das Einlegen des flächigen Zellstoffs bzw. des Küchenpapiers ist allerdings sehr umständlich und zeitaufwändig.

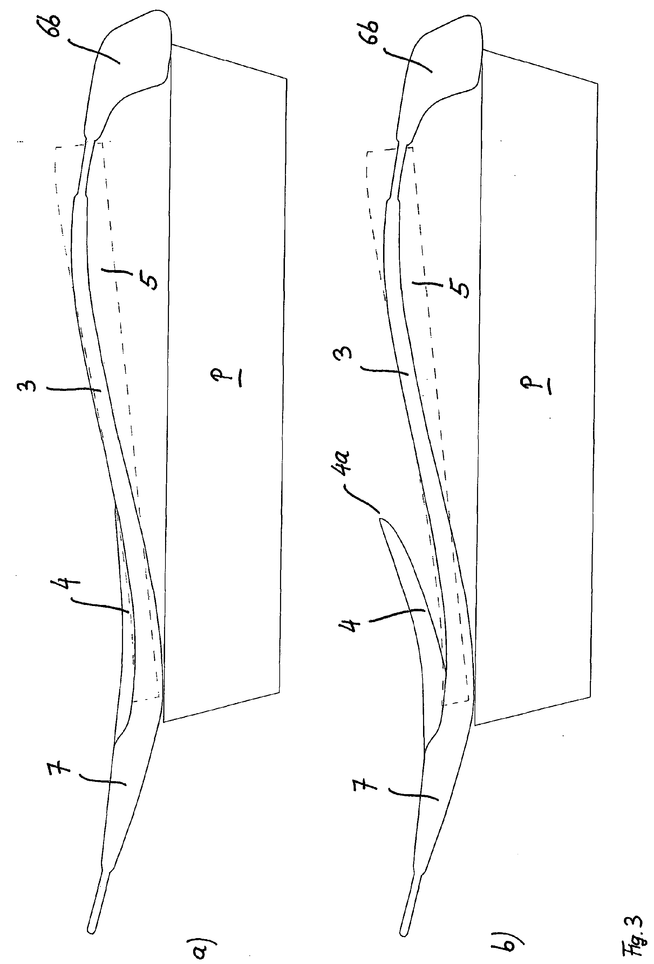

Die Druckschrift EP-A-0 185 969 offenbart einen Spritzschutz für Töpfe, Pfannen und andere Kochgerät, mit einer elastisch beweglichen Zunge 9, mittels derer ein flächiges Spritzschutz-Papier 5 einklemmbar ist (siehe Figur 3).

Hiervon ausgehend liegt der Erfindung die Aufgabe zugrunde, einen platzsparenden und einfach zu reinigenden Spritzschutz bereit zu stellen, der auf möglichst einfache Weise verwendet und gehandhabt werden kann.

Diese Aufgabe wird mit einem Spritzschutz mit den Merkmalen des Anspruchs 1 gelöst. Bevorzugte Ausführungsformen des erfindungsgemäßen Spritzschutzes sind den abhängigen Ansprüchen zu entnehmen.

Der erfindungsgemäße Spritzschutz weist eine langstielige Zange mit zwei Schenkeln auf, die relativ zueinander zusammendrückbar sind. Zwischen den beiden Schenkeln ist eine bewegliche Zunge angeordnet, die sich beim Zusammendrücken der beiden Schenkel anhebt. Werden die beiden Schenkel zusammengedrückt, hebt sich die Zunge selbsttätig zumindest teilweise und insbesondere in ihrem vorderen Bereich, der den freien Schenkelenden zugewandt ist, soweit an, dass die Zunge über den beiden Schenkeln vorsteht. Dadurch bildet sich zwischen der angehobenen Zunge und den beiden Schenkeln ein Klemmraum aus, in den ein flächiges Spritzschutzelement eingelegt werden kann. Wird dann bei eingelegtem Spritzschutzelement der Druck auf die beiden Schenkeln gelöst, geht der Spritzschutz in seine Grundstellung zurück, in der sich die Zunge zumindest im Wesentlichen in einer Ebene mit den beiden Schenkeln befindet. Durch die Bewegung der Zunge in diese Grundstellung wird das zwischen der Zunge und den beiden Schenkeln eingelegte Spritzschutzelement zwischen der Zunge und den beiden Schenkeln eingeklemmt und dort gehalten.

In dieser Stellung kann der erfindungsgemäße Spritzschutz dann auf den oberen Rand eines Topfs oder eine Pfanne oder auch eines anderen Kochgeräts aufgelegt werden, so dass der Spritzschutz mit dem darin eingelegten Spritzschutzelement die Öffnung des Topfs, der Pfanne oder des Kochgeräts abdeckt und dadurch ein Herausspritzen von Fett oder Flüssigkeit verhindert.

Bei dem Spritzschutzelement, welches zwischen die beiden Schenkel und der beweglichen Zunge eingelegt wird, handelt es sich zweckmäßig um ein dampfdurchlässiges und gleichzeitig flüssigkeitssaugendes Tuch, beispielsweise um ein Textiltuch oder ein Zellstofftuch, wie z.B. ein herkömmliches Küchenpapier.

Der erfindungsgemäße Spritzschutz zeichnet sich dabei durch seine einfache Handhabung und insbesondere durch das einfache Einlegen und Einklemmen des Spritzschutzelements aus.

Nach der bestimmungsgemäßen Verwendung des erfindungsgemäßen Spritzschutzes kann das eingeklemmte Spritzschutzelement auf einfache Art aus dem Spritzschutz entfernt werden, ohne dass der Benutzer dabei mit dem verschmutzen Spritzschutzelement in Berührung kommt. Dabei werden die beiden Schenkel wieder zusammengedrückt, wobei sich die zwischen den beiden Schenkeln angeordnete Zunge anhebt und die Klemmung des eingelegten Spritzschutzelements frei gibt. Das eingelegte Spritzschutzelement fällt dabei aus dem Spritzschutz heraus und kann beispielsweise direkt in einen Abfalleimer entsorgt werden.

Diese und weitere Vorteile des erfindungsgemäßen Spritzschutzes ergeben sich aus dem nachfolgend unter Bezugnahme auf die begleitenden Zeichnungen näher beschriebenen Ausführungsbeispiel. Die Zeichnungen zeigen:
- **Fig. 1:**: Draufsicht auf einen erfindungsgemäßen Spritzschutz in einer ersten Funktionsstellung;
- **Fig. 2:**: Draufsicht auf den Spritzschutz von Fig.1 in einer zweiten Funktionsstellung;
- **Fig. 3:**: Seitenansicht einer Pfanne mit einem aufgelegten Spritzschutz gemäß der Erfindung in einer ersten Funktionsstellung des Spritzschutzes (Fig.3a) und einer zweiten Funktionsstellung des Spritzschutzes (Fig.3b), wobei die erste Funktionsstellung der Funktionsstellung von Fig. 1 und die zweite Funktionsstellung der Funktionsstellung von Fig. 2 entspricht.

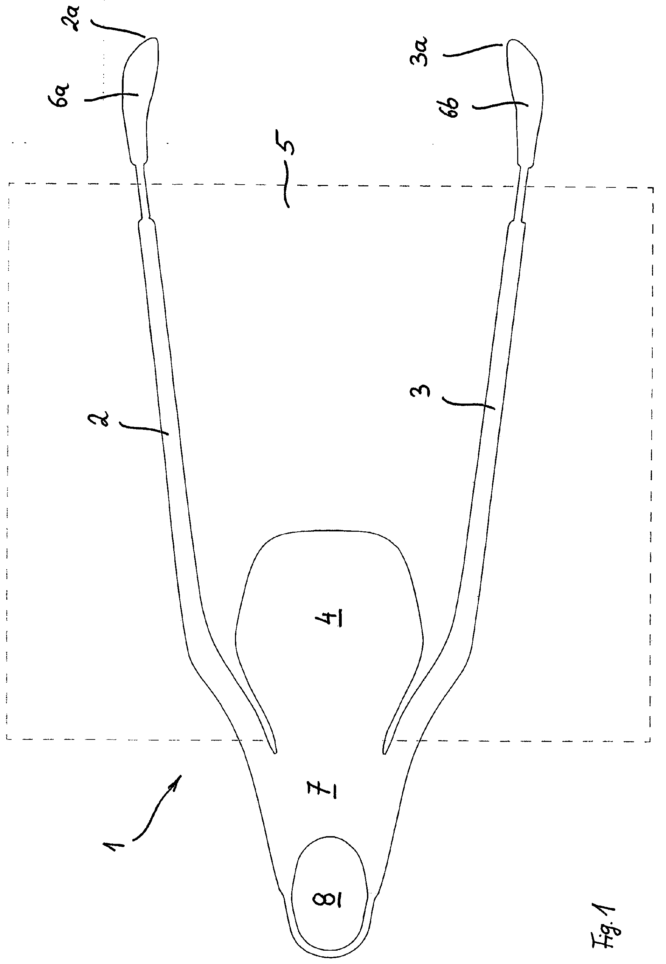

In Fig. 1 ist ein erfindungsgemäßer Spritzschutz in einer Draufsicht dargestellt, wobei sich der Spritzschutz in einer ersten Funktionsstellung befindet. Der Spritzschutz umfasst eine langstielige Zange 1 mit zwei Schenkeln 2, 3, die relativ zueinander zusammendrückbar sind. Die beiden Schenkel 2, 3 sind zweckmäßig einstückig und elastisch an einem Grundkörper 7 angeformt, so dass die beiden Schenkel 2, 3 relativ zueinander und bevorzugt mittels einer Hand eines Benutzers zusammengedrückt werden können. Der Grundkörper 7 ist zweckmäßig aus Kunststoff. Sowohl der Grundkörper 7 als auch die beiden Schenkel 2, 3 können jedoch auch aus Metall gefertigt sein, wobei bevorzugt der Grundkörper 7 und zumindest ein Teil der beiden Schenkel 2, 3 mit einem Kunststoffüberzug versehen ist. Dies verhindert, dass die Oberfläche der langstieligen Zange zu stark aufgeheizt wird, wenn der Spritzschutz bestimmungsgemäß auf einem heißen Topf oder einer heißen Pfanne aufgelegt wird. An dem hinteren Ende des Grundkörpers 7, welches den beiden Schenkeln 2, 3 gegenüberliegt, ist an dem Grundkörper 7 zweckmäßig eine Öse 8 zum Aufhängen des erfindungsgemäßen Spritzschutzes an einem Haken angeordnet.

Zwischen den beiden Schenkeln 2, 3 ist an dem Grundkörper 7 eine bewegliche Zunge 4 angeformt. Zweckmäßig ist die bewegliche Zunge 4 aus demselben Material wie der Grundkörper 7 und dort einstückig angeformt. Die Zunge 4 ist dabei mit den beiden Schenkeln 2, 3 so gekoppelt, dass sich die Zunge 4 beim Zusammendrücken der beiden Schenkel 2, 3 anhebt.

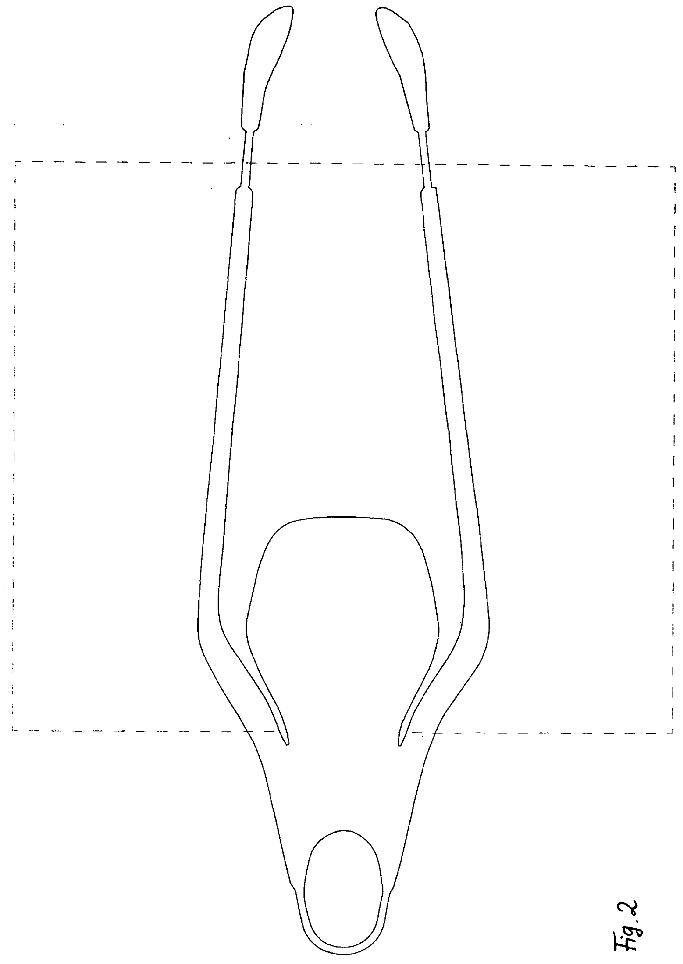

Aus dieser Anordnung der Zunge 4 und deren Kopplung mit den beiden Schenkeln 2, 3 ergeben sich im Wesentlichen zwei Funktionsstellungen des erfindungsgemäßen Spritzschutzes, die in den Fig. 1 und 2 sowie den Fig. 3a und 3b dargestellt sind. Die Figuren 1 und 3a zeigen den erfindungsgemäßen Spritzschutz in der ersten Funktionsstellung und die beiden Fig. 2 und 3b zeigen den Spritzschutz in der zweiten Funktionsstellung. In der ersten Funktionsstellung (Fig. 1 und 3a) sind die beiden Schenkel 2 und 3 in einer Grundstellung, in der sie einen maximalen Abstand zueinander haben. Diese Grundstellung ist durch die Geometrie der Anordnung der beiden Schenkel 2, 3 am Grundkörper 7 vorgegeben. In dieser ersten Grundstellung des Spritzschutzes befindet sich die zwischen den beiden Schenkeln 2, 3 angeordneten Zunge 4 zumindest annähernd in der Ebene der beiden Schenkel 2, 3, wie aus Fig. 3a ersichtlich. Aus Fig. 3a ist zu erkennen, dass die beiden Schenkel 2, 3 dabei in Längsrichtung nach oben gebogen sind. Die Schenkel 2, 3 können jedoch auch gerade (d.h. ohne Biegung in Längsrichtung) ausgebildet sein. In der ersten Funktionsstellung befindet sich die beweglich Zunge 4 zumindest in dem vorderen Abschnitt der beiden Schenkel 2, 3, der an den Grundkörper angrenzt, auf einer (ggf. auch gekrümmten) Ebene mit den beiden Schenkeln 2, 3.

Durch Zusammendrücken der beiden Schenkel 2, 3 gegen die Rückstellkraft, die durch die elastische Ausbildung der Schenkel 2, 3 hervorgerufen wird, kann der Spritzschutz in die zweite Funktionsstellung gebracht werden, welche in den Fig. 2 und 3b gezeigt ist. In dieser zweiten Funktionsstellung sind die beiden Schenkel 2, 3 insbesondere an ihren freien Enden 2a, 3a relativ zueinander zusammengedrückt und weisen im Vergleich zu der ersten Funktionsstellung einen geringeren Abstand zueinander auf. Beim Zusammendrücken der beiden Schenkel 2, 3 in die zweiten Funktionsstellung hebt sich die bewegliche Zunge 4 an und wird dadurch aus der Ebene der beiden Schenkel 2, 3 herausgehoben, wie in Figur 3b gezeigt. In dieser zweiten Funktionsstellung steht die bewegliche Zunge 4 zumindest teilweise und insbesondere in ihrem den freien Schenkelenden 2a, 3a, zugewandten vorderen Bereich 4a über die beiden Schenkel 2, 3 hervor.

In der zweiten Funktionsstellung (Fig.2 und Fig.3b) kann zwischen die angehobene Zunge 4 und den beiden Schenkeln 2,3 ein flächiges Spritzschutzelement eingefügt werden. Dies wird dadurch ermöglicht, dass sich beim Zusammendrücken der beiden Schenkel 2, 3 in die zweiten Funktionsstellung und durch das Anheben der Zunge 4 zwischen der Unterseite der Zunge 4 und den Oberseiten der beiden Schenkel 2, 3 ein Klemmraum ausbildet, in den ein flächiges Spritzschutzelement 5 einlegbar ist. Bei dem flächigen Spritzschutzelement 5 handelt es sich zweckmäßig um ein dampfdurchlässiges Tuch, wie z. B ein Textil-, ein Papier- oder ein Zellstofftuch, insbesondere ein Tissue-Papiertuch. Besonders zweckmäßig ist dabei ein dampfdurchlässiges und gleichzeitig flüssigkeits- oder fettsaugendes Tuch. In den Figuren ist das Spritzschutzelement 5 jeweils gestrichelt dargestellt.

Wird nach dem Einlegen eines flächigen Spritzschutzelements 5 in den Klemmraum zwischen der angehobenen Zunge 4 und den beiden Schenkeln 2, 3 der seitliche Druck auf die beiden Schenkel 2, 3 gelöst (wodurch sich das Spritzschutzelement in seine erste Funktionsstellung (Grundstellung) zurückbewegt), wird das eingelegte Spritzschutzelement 5 zwischen der Unterseite der Zunge 4 und den Oberseiten der beiden Schenkel 2, 3 eingeklemmt, indem sich die bewegliche Zunge 4 beim Übergang in die erste Funktionsstellung (Grundstellung) absenkt und dadurch das eingelegte Spritzschutzelement 5 einklemmt (Figur 3a).

Der Spritzschutz mit dem darin eingeklemmten Spritzschutzelement 5 kann dann bestimmungsgemäß auf einen Topf oder eine Pfanne P aufgelegt werden, wie in Figur 3 gezeigt.

Zweckmäßig weisen die beiden Schenkel 2, 3 an ihrem freien Ende 2a, 3a jeweils einen gekröpften Arm 6a, 6b auf. Das jeweils untere Ende des geköpften Arms 6a, 6b dient dabei als Auflagefläche beim Auflegen des Spritzschutzes auf den Rand eines Topfs oder einer Pfanne P. Durch die Krümmung der beiden Schenkel 2, 3 in Längsrichtung ergibt sich in Verbindung mit den gekröpften Armen 6a, 6b beim Auflegen des Spritzschutzes auf den Rand eines Topfs oder einer Pfanne P zwischen dem Rand und der Unterseite der beiden Schenkel 2, 3 ein Freiraum. In diesen Freiraum können beim Kochen oder Braten aufsteigende Dämpfe oder Fettspritzer eintreten. Eintretende Fettspritzer werden dabei durch das in den Spritzschutz eingelegte Spritzschutzelement 5 zurückgehalten und können den Zwischenraum zwischen dem Rand des Topfs bzw. der Pfanne P und dem darauf aufgelegten Spritzschutz nicht verlassen, weil sie durch das Spritzschutzelement 5 zurückgehalten werden. Zweckmäßig werden Flüssigkeits- oder Fettspritzer durch das flüssigkeits- und fettsaugende Spritzschutzelement 5 aufgesaugt. Gase und Dämpfe, wie z.B. der beim Kochen entstehende Wasserdampf, können dagegen durch das dampfdurchlässige Spritzschutzelement 5 ausströmen.

Nach Beendigung des Koch- oder Bratvorgangs kann das eingelegte Spritzschutzelement 5 auf einfache Weise aus dem Spritzschutz entnommen werden, indem der Spritzschutz zunächst von dem Topf bzw. der Pfanne P abgenommen und durch seitlichen Druck auf die beiden Schenkel 2,3 in seine zweite Funktionsstellung (Fig. 3b) gebracht wird, in welcher die bewegliche Zunge 4 in Bezug auf die beiden Schenkel 2, 3 angehoben ist. Dadurch wird der Klemmraum zwischen der Unterseite der Zunge 4 und den Oberseiten der Schenkel 2, 3 wieder geöffnet und die Klemmung des eingelegten Spritzschutzelements 5 aufgehoben, so dass das Spritzschutzelement 5 aus dem Spritzschutz herausgezogen werden kann. Besonders zweckmäßig ist es dabei, zum Entfernen des Spritzschutzelements 5 aus dem Spritzschutz diesen über einen Abfallbehälter zu halten und ihn durch seitlichen Druck auf die beiden Schenkel 2, 3 in seine zweite Funktionsstellung zu bringen, so dass das eingelegte Spritzschutzelement 5 außer Eingriff zwischen der Zunge 4 und den beiden Schenkeln 2, 3 gebracht wird und frei in den Abfallbehälter gleiten kann. Dies hat den Vorteil, dass der Benutzer das ggf. mit Fett verunreinigte Spritzschutzelement 5 nicht anfassen muss, um es aus dem Spritzschutz zu entfernen und zu entsorgen.

## Patentansprüche

1. Spritzschutz für Töpfe, Pfannen und andere Kochgeräte, mit einer langstieligen Zange (1), welche zwei Schenkel (2, 3) aufweist, die relativ zueinander zusammendrückbar sind, wobei zwischen den beiden Schenkeln eine bewegliche Zunge (4) angeordnet ist, die sich beim Zusammendrücken der beiden Schenkel (2, 3) anhebt.

2. Spritzschutz nach Anspruch 1, **dadurch gekennzeichnet, dass** sich die Zunge (4) beim Zusammendrücken der beiden Schenkel (2, 3) soweit anhebt, dass die Zunge (4) zumindest teilweise und insbesondere in ihrem den freien Schenkelenden (2a, 3a) zugewandten vorderen Bereich (4a) über den beiden Schenkeln (2, 3) vorsteht.

3. Spritzschutz nach einem der voranstehenden Ansprüche, **dadurch gekennzeichnet, dass** die Zunge (4) im Wesentlichen flach ausgebildet ist und sich in einer Grundstellung der Zange (1), in der keine Kraft auf die beiden Schenkel (2, 3) ausgeübt wird, zumindest im Wesentlichen in der Ebene der beiden Schenkel (2, 3) befindet.

4. Spritzschutz nach einem der voranstehenden Ansprüche, **dadurch gekennzeichnet, dass** die beiden Schenkel (2, 3) elastisch ausgebildet sind.

5. Spritzschutz nach einem der voranstehenden Ansprüche, **dadurch gekennzeichnet, dass** die beiden Schenkel (2, 3) gegen eine Rückstellkraft zusammendrückbar sind.

6. Spritzschutz nach einem der voranstehenden Ansprüche, **dadurch gekennzeichnet, dass** zwischen den beiden Schenkeln (2, 3) und der Zunge (4) ein flächiges Spritzschutzelement (5) einklemmbar ist.

7. Spritzschutz nach Anspruch 6, **dadurch gekennzeichnet, dass** sich beim Zusammendrücken der beiden Schenkel (2, 3) zwischen der Zunge (4) und den beiden Schenkeln (2, 3) ein Klemmraum ausbildet, in den ein flächiges Spritzschutzelement (5) einklemmbar ist.

8. Spritzschutz nach Anspruch 6, **dadurch gekennzeichnet, dass** das Spritzschutzelement (5) zwischen einer Unterseite der Zunge (4) und einer Oberseite der Schenkel (2, 3) einklemmbar ist.

9. Spritzschutz nach einem der Ansprüche 6 bis 8, **dadurch gekennzeichnet, dass** es sich bei dem Spritzschutzelement (5) um ein dampfdurchlässiges Tuch handelt, insbesondere ein Textil-, Papier- oder Zellstofftuch, insbesondere ein Tissue-Papiertuch.

10. Spritzschutz nach einem der voranstehenden Ansprüche, **dadurch gekennzeichnet, dass** die beiden Schenkel (2, 3) in ihrer Längsrichtung gebogen sind.

11. Spritzschutz nach einem der voranstehenden Ansprüche, **dadurch gekennzeichnet, dass** die beiden Schenkel (2, 3) an ihrem freien Ende (2a, 3a) jeweils einen gekröpften Arm (6a, 6b) aufweisen.

12. Spritzschutz nach einem der voranstehenden Ansprüche, **dadurch gekennzeichnet, dass** der Spritzschutz einen Grundkörper (7) aufweist, an dem die Zunge (4) insbesondere einstückig angeformt ist und an dem die Schenkel (2, 3) angeordnet sind, wobei die Schenkel insbesondere durch zwei Metallstangen gebildet sind, welche in den Grundkörper (7) eingesteckt sind.

13. Spritzschutz nach Anspruch 12, **dadurch gekennzeichnet, dass** der Grundkörper (7) einen Handgriff bildet.

14. Spritzschutz nach einem der voranstehenden Ansprüche, **dadurch gekennzeichnet, dass** der Spritzschutz so ausgebildet ist, dass er wie folgt verwendet werden kann:
- Zusammendrücken der beiden Schenkel (2, 3), wodurch sich die zwischen den Schenkeln angeordnete bewegliche Zunge (4) anhebt, und Halten der beiden Schenkel (2, 3) in ihrer zusammengedrückten Stellung,
- Einlegen eines flächigen Spritzschutzelements (5) zwischen der angehobenen Zunge (4) und den beiden Schenkeln (2, 3),
- Beenden des Zusammendrückens der beiden Schenkel (2, 3), wodurch sich die beiden Schenkel sowie die Zunge (4) aufgrund einer Rückstellkraft in eine Grundstellung bewegen, in der sich die Zunge (4) zumindest im Wesentlichen in der Ebene der beiden Schenkel (2, 3) befindet, wobei das eingelegte Spritzschutzelement (5) bei der Bewegung der Zunge (4) in ihre Grundstellung zwischen der Zunge (4) und den beiden Schenkeln (2, 3) eingeklemmt wird.

## Claims

1. Splatter guard for pots, pans, and other cooking appliances, with long-handled tongs (1) having two legs (2, 3) which can be pressed together relative to one another, wherein a movable tongue (4) is situated between the two legs which is raised during the pressing together of the two legs (2, 3).

2. Splatter guard according to Claim 1, **characterized in that** the tongue (4) is raised during the pressing together of the two legs (2, 3) to the extent that the tongue (4) protrudes above the two legs (2, 3) at least partially and, in particular, in their front section (4a) facing the free leg ends (2a, 3a).

3. Splatter guard according to Claim 1, **characterized in that** the tongue (4) is shaped essentially flat and in a basic position of the tongs (1), in which force is not exerted on the two legs (2, 3), is situated at least essentially in the plane of the two legs (2, 3).

4. Splatter guard according to one of the preceding claims, **characterized in that** the two legs (2, 3), are formed elastically.

5. Splatter guard according to one of the preceding claims, **characterized in that** the two legs (2, 3) can be pressed together against a resetting force.

6. Splatter guard according to one of the preceding claims, **characterized in that** a flat splatter guard element (5) can be clamped between the two legs (2, 3) and the tongue (4).

7. Splatter guard according to Claim 6, **characterized in that** with the pressing together of the two legs (2, 3), a clamping space is formed between the tongue (4) and the two legs (2, 3) into which a flat splatter guard element (5) can be clamped.

8. Splatter guard according to Claim 6, **characterized in that** the splatter guard element (5) can be clamped between an underside of the tongue (4) and an upper side of the legs (2, 3).

9. Splatter guard according to one of claims 6 to 8, **characterized in that** the splatter guard element (5) is a vapor-permeable cloth, in particular a textile cloth, paper towels, or a cellulose cloth, in particular, tissue-paper towels.

10. Splatter guard according to one of the preceding claims, **characterized in that** the two legs (2, 3) are bent in their longitudinal direction.

11. Splatter guard according to one of the preceding claims, **characterized in that** the two legs (2, 3) have an cranked arm (6a, 6b) on their free ends (2a, 3a).

12. Splatter guard according to one of the preceding claims, **characterized in that** the splatter guard has a main body (7), on which the tongue (4) is formed, in particular, in one piece, and on which the legs (2, 3) are situated, wherein the legs (2, 3) are formed, in particular, by two metal rods, which are inserted in the main body (7).

13. Splatter guard according to Claim 12, **characterized in that** the main body (7) forms a handle.

14. Splatter guard according to one of the preceding claims, **characterized in that** the splatter guard is used as follows:
- pressing together of the two legs (2, 3), wherein the movable tongue (4) situated between the legs (2, 3) is raised, and holding of the two legs (2, 3) in their pressed-together position;
- insertion of a flat splatter guard element (5) between the raised tongue (4) and the two legs (2, 3);
- ending of the pressing together of the two legs (2, 3), wherein the two legs (2, 3) and the tongue (4) move as a result of a resetting force to a basic position in which the tongue (4) is located, at least essentially, in the plane of the two legs (2, 3), wherein the inserted splatter guard element (5) is clamped between the tongue (4) and the two legs (2, 3) during the movement of the tongue (4) to its basic position.

## Revendications

1. Protection contre les projections pour casseroles, poêles et autres appareils de cuisson, comprenant une pince (1) à longue tige, qui présente deux branches (2, 3), qui peuvent être compressées l'une par rapport à l'autre, dans laquelle une languette (4) mobile est disposée entre les deux branches, qui se soulève lors de la compression des deux branches (2, 3).

2. Protection contre les projections selon la revendication 1, **caractérisée en ce que** la languette (4) se soulève lors de la compression des deux branches (2, 3) jusqu'à ce que la languette (4) fasse saillie, au moins en partie et en particulier dans sa zone (4a) avant tournée vers les extrémités de branche (2a, 3a) libres, des deux branches (2, 3).

3. Protection contre les projections selon l'une quelconque des revendications précédentes, **caractérisée en ce que** la languette (4) est réalisée sensiblement de manière plate et se trouve au moins sensiblement dans le plan des deux branches (2, 3), dans une position de base de la pince (1), dans laquelle aucune force n'est exercée sur les deux branches (2, 3).

4. Protection contre les projections selon l'une quelconque des revendications précédentes, **caractérisée en ce que** les deux branches (2, 3) sont réalisées de manière élastique.

5. Protection contre les projections selon l'une quelconque des revendications précédentes, **caractérisée en ce que** les deux branches (2, 3) peuvent être compressées à l'encontre d'une force de rappel.

6. Protection contre les projections selon l'une quelconque des revendications précédentes, **caractérisée en ce qu'**un élément de protection contre les projections (5) plat peut être coincé entre les deux branches (2, 3) et la languette (4).

7. Protection contre les projections selon la revendication 6, **caractérisée en ce qu'**un espace de serrage se réalise lors de la compression des deux branches (2, 3) entre la languette (4) et les deux branches (2, 3), dans lequel un élément de protection contre les projections (5) plat peut être coincé.

8. Protection contre les projections selon la revendication 6, **caractérisée en ce que** l'élément de protection contre les projections (5) peut être coincé entre un côté inférieur de la languette (4) et un côté supérieur des branches (2, 3).

9. Protection contre les projections selon l'une quelconque des revendications 6 à 8, **caractérisée en ce que** l'élément de protection contre les projections (5) est un chiffon laissant passer la vapeur, en particulier un chiffon en textile, un chiffon en papier ou un chiffon en matière cellulaire, en particulier un chiffon en papier tissu.

10. Protection contre les projections selon l'une quelconque des revendications précédentes, **caractérisée en ce que** les deux branches (2, 3) sont pliées dans leur sens longitudinal.

11. Protection contre les projections selon l'une quelconque des revendications précédentes, **caractérisée en ce que** les deux branches (2, 3) présentent, au niveau de leur extrémité libre (2a, 3a), respectivement un bras (6a, 6b) coudé.

12. Protection contre les projections selon l'une quelconque des revendications précédentes, **caractérisée en ce que** la protection contre les projections présente un corps de base (7), au niveau duquel la languette (4) est formée en particulier d'un seul tenant et au niveau duquel les branches (2, 3) sont disposées, dans laquelle les branches sont formées en particulier par deux barres métalliques, qui sont enfichées dans le corps de base (7).

13. Protection contre les projections selon la revendication 12, **caractérisée en ce que** le corps de base (7) forme une poignée.

14. Protection contre les projections selon l'une quelconque des revendications précédentes, **caractérisée en ce que** la protection contre les projections est réalisée de telle sorte qu'elle peut être utilisée comme suit :
- compresser les deux branches (2, 3), grâce à quoi la languette (4) mobile disposée entre les branches se soulève, et maintenir les deux branches (2, 3) dans leur position compressée,
- insérer un élément de protection contre les projections (5) plat entre la languette (4) relevée et les deux branches (2, 3),
- mettre un terme à la compression des deux branches (2, 3), grâce à quoi les deux branches ainsi que la languette (4) se déplacent du fait d'une force de rappel dans une position de base, dans laquelle la languette (4) se trouve sensiblement dans le plan des deux branches (2, 3), dans laquelle l'élément de protection contre les projections (5) inséré est coincé dans sa position de base entre la languette (4) et les deux branches (2, 3) lors du déplacement de la languette (4).
